# EUROPÄISCHE PATENTANMELDUNG

(11) **EP 1 783 416 A2**
(43) Veröffentlichungstag der Anmeldung: **09.05.2007**
(21) Anmeldenummer: 06022564.6
(22) Anmeldetag: 28.10.2006
(51) Int. Cl.: F16L 51/02, F01N 7/18

(54) **Flexibles Leitungselement**

(30) Priorität: 02.11.2005 DE 102005052204
(71) Anmelder: Witzenmann GmbH, 75175 Pforzheim (DE)
(72) Erfinder: Corbière, Stéphane, 76227 Karlsruhe (DE); Henry, Justin, 77186 Noisiel (FR); Knape, Hendrik, 76227 Karlsruhe (DE); Lange, Wolfgang, 75173 Pforzheim (DE); Rösler, René, 76137 Karlsruhe (DE)
(74) Vertreter: Blumenröhr, Dietrich

(57) **Zusammenfassung**

Es wird ein flexibles Leitungselement insbesondere für Abgasanlagen von Kraftfahrzeugen mit einer flexiblen Schlauchleitung (5) und einem auf der radialen Außenseite der Schlauchleitung (5) angeordneten schlauchförmigen Gestricke (1) beschrieben, wobei das schlauchförmige Gestricke (1) aus Drahtmaschen (1a,9a) mit Maschenkopf (3,7), Maschenschenkeln (2,6) und Maschenfüßen (4,8) besteht. Dabei ist das Gestricke (1) so ausgebildet, dass die Maschenschenkel (2,6) der Drahtmaschen (1a) des Gestrickes (1) auf der zur Schlauchleitung (5) hingewandten radialen Innenseite des Gestrickes (1) angeordnet sind, und dass die Maschenköpfe (3) und die Maschenfüße (4) der Drahtmaschen (1a,9a) auf der der Schlauchleitung (5) abgewandten radialen Außenseite des Gestrickes (1) angeordnet sind.

## Beschreibung

Die Erfindung betrifft ein flexibles Leitungselement insbesondere für Abgasanlagen von Kraftfahrzeugen mit einer mediumführenden flexiblen Schlauchleitung und einem auf der radialen Außenseite der Schlauchleitung angeordneten schlauchförmigen Gestricke, wobei das schlauchförmige Gestricke aus Drahtmaschen mit Maschenkopf, Maschenschenkeln und Maschenfüßen besteht.

Derartige Leitungselemente mit schlauchförmigem Gestricke sind beispielsweise aus der DE 20 2004 008 089 U1 bekannt und werden hauptsächlich bei flexiblen Leitungselementen für Abgasleitungen von Verbrennungsmotoren bei Kraftfahrzeugen eingesetzt, wobei der Gestrickeschlauch als zusätzliches Dämpfungselement für einen Balg dient, um auf den Balg übertragene Schwingungen, beispielsweise Schwingungen des Motors, der Karosserie oder der Stoßdämpfer abzuschwächen. Das schlauchförmige Gestricke aus Drahtmaschen liegt hierbei auf der radialen Außenseite des Balges an.

Der Gestrickeschlauch hat nun die Eigenschaft, dass sich die Maschen des Gestrickes bei einer Verformung, beispielsweise einer axialen Längenänderung oder einem Verbiegen des Balges in Querrichtung ineinander verschieben können und so ein dauerhaftes Anliegen des Gestrickeschlauches am Balg und demgemäß auch eine Dämpfungswirkung für den Balg - auch bei kurzzeitig gestauchtem Balg - ermöglichen.

In der Regel werden die bekannten Gestrickeschläuche nahtlos auf Strickmaschinen gefertigt. Die Gestricke können hierbei ein-, zwei- oder mehrfädig hergestellt werden.

Die übliche Stricktechnik besteht darin, dass sich die Maschenköpfe und Maschenfüße der Maschen des Gestrickes auf der radialen Innenseite des Gestrickeschlauches befinden. Diese Anordnung führt jedoch dazu, dass sich, insbesondere bei dem Einsatz auf Bälgen durch eine mögliche und entsprechend dem Dämpfungszweck des Balges gewünschte Verformung, die Maschenköpfe und Maschenfüße in den einzelnen Wellen des Balges verhaken.

Dieses Verhaken führt wiederum dazu, dass die Lebensdauer eines derart angeordneten Gestrickeschlauches auf einem gewellten Balg oder allgemeiner einer entsprechenden Schlauchleitung mit profilierter Außenseite stark reduziert wird. Die Reibungskräfte beim Verhaken des schlauchförmigen Gestrickes mit dem Balg aufgrund des punktuellen Aufliegens der Maschenköpfe bzw. - füße führen zu starken Abnutzungserscheinungen des Gestrickes insgesamt bzw. zu einem Verbiegen der Maschen. Die Lebensdauer der Maschen und damit des gesamten Leitungselementes wird erheblich reduziert. Folge ist beispielsweise eine verminderte Dämpfungswirkung des Gestrickeschlauches mit einhergehenden schlechteren akustischen Eigenschaften.

Ein weiterer Nachteil eines derart angeordneten schlauchförmigen Gestrickes ist die ungleichmäßige Anlage an die Schlauchleitung, insbesondere bei einer gewellten oder gewickelten Ausführungsform. Auch die ungleichmäßige Anlage ist hinsichtlich der Lebensdauer des schlauchförmigen Gestrickes nicht optimal, da das schlauchförmige Gestricke auf diese Weise in bestimmten Bereichen unterschiedlich stark beansprucht wird und gegebenenfalls auch die Schlauchleitung dadurch beschädigt und die Lebensdauer der Schlauchleitung signifikant verkürzt.

Hiervon ausgehend liegt die Aufgabe der vorliegenden Erfindung darin, ein Leitungselement der eingangs genannten Art zur Verfügung zu stellen, bei dem das schlauchförmige Gestricke so angeordnet ist, dass ein Verhaken der einzelnen Maschen bei entsprechender Verformung der Schlauchleitung nicht mehr bzw. nur noch in sehr geringem Umfang auftritt und punktuelle bzw. dass stark unterschiedliche Reibungskräfte über Umfang und Länge des Gestrickes, die die Lebensdauer des schlauchförmigen Gestrickes herabsetzen, vermieden werden.

Diese Aufgabe wird erfindungsgemäß dadurch gelöst, dass das Gestricke so ausgebildet ist, dass die Maschenschenkel der Drahtmaschen des Gestrickes auf der zur Schlauchleitung hingewandten radialen Innenseite des Gestrickes angeordnet sind, und dass die Maschenköpfe und die Maschenfüße der Drahtmaschen auf der der Schlauchleitung abgewandten radialen Außenseite des Gestrickes angeordnet sind.

Hierdurch ergibt sich der wesentliche Vorteil, dass das schlauchförmige Gestricke mit den im Wesentlichen in Axialrichtung verlaufenden Maschenschenkeln der Drahtmaschen an der Außenseite der Schlauchleitung anliegt und nicht mit den im Wesentlichen in Umfangsrichtung verlaufenden Maschenköpfen und Maschenfüßen. Dies ermöglicht eine nahezu "glatte" Anordnung der Maschen auf der Schlauchleitung, da die Erstreckungsrichtung der Maschenschenkel in etwa rechtwinklig zu derjenigen der Wellung oder Wicklung (oder sonstiger im wesentlichen in Umfangsrichtung der Schlauchleitung verlaufender Oberflächenänderungen, die zur Erhöhung der Flexibilität der Schlauchleitung dienen) der Schlauchleitung verläuft und damit ein gegenseitiges Verhaken bzw. Blockieren verhindert wird. Die Reibung des schlauchförmigen Gestrickes mit der Schlauchleitung wird dahingehend optimiert, dass möglichst wenig Reibung der Drahtmaschen untereinander auftritt und ebenfalls keine Biegespannung zwischen zwei Maschen bei einem Aufwölben des schlauchförmigen Gestrickes, beispielsweise bei einem Einsatz auf einem gewellten Leitungselement, stattfindet.

Vorzugsweise sind die Drahtmaschen des schlauchförmigen Gestrickes aus Edelstahl hergestellt. Außerdem besteht das Gestricke in an sich üblicher Weise aus einer Anordnung von Steg- und Nadelmaschen.

Im Hinblick auf die Steifigkeit des Gestrickes und zur einfacheren Handhabung des Gestrickes bei der Herstellung hat es sich als vorteilhaft erwiesen, dass der Durchmesser der Drähte des schlauchförmigen Gestrickes kleiner als 0,4 mm ist und insbesondere zwischen 0,15 mm und 0,3 mm liegt. Insbesondere bietet die Ausgestaltung der Drähte mit einem Durchmesser von zwischen 0,23 mm oder 0,25 mm ein Optimum aus einfacher Handhabbarkeit, einfacher Strickbarkeit, Zug- und Dämpfungsfähigkeit sowie Kostengünstigkeit bei der Herstellung des schlauchförmigen Gestrickes.

Für die Anzahl der Drähte, aus denen das schlauchförmige Gestricke hergestellt ist, ist es vorteilhaft, wenn das schlauchförmige Gestricke aus weniger als 5 Drähten, insbesondere aus 3 Drähten hergestellt ist. Diese Anzahl ist insbesondere im Hinblick auf die Herstellungsart günstig.

Für den Aufbau des schlauchförmigen Gestrickes bzw. der Maschen des Gestrickes hat es sich als vorteilhaft erwiesen, dass einerseits die Anzahl der Nadelmaschen und der Stegmaschen auf dem Umfang sowie andererseits die Breite der Nadelmaschen und der Stegmaschen, die aus dem maximalen senkrecht zu der Symmetrieachse einer Nadel- oder Stegmasche gemessenen Abstand zweier in den Maschenkopf übergehenden Maschenschenkel besteht, so angeordnet sind, dass das Verhältnis aus Breite einer Stegmasche und Breite einer Nadelmasche zwischen 0,5 und 2 beträgt.

Diese Ausgestaltung garantiert, dass die Abmessungen der Nadelmaschen und Stegmaschen nicht zu stark differieren. Dadurch wird eine ungleichmäßige Anlage der Drahtmaschen des schlauchförmigen Gestrickes auf der Schlauchleitung vermieden und somit ist eine gleichmäßigere und konstantere Reibung des schlauchförmigen Gestrickes auf einer bzw. um eine Schlauchleitung gegeben.

Nicht nur die Breite der Nadel- und Stegmaschen ist im Hinblick auf eine gleichmäßige Anlage der Maschen auf der Schlauchleitung wichtig, sondern ebenfalls die Maschenhöhe, die durch den in axialer Richtung parallel zur Achse der Schlauchleitung gemessenen Abstand zwischen Maschenkopf einer Nadelmasche und Maschenkopf einer im weiteren Verlauf eines Drahtes benachbarten Stegmasche entlang der Symmetrieachsen der Maschen definiert ist. Diese sollte höchstens doppelt so groß wie die Steigung eines gewickelten Leitungselementes oder höchstens doppelt so groß wie die Wellenlänge eines gewellten Leitungselementes sein.

Auch diese Ausgestaltung zielt auf eine gleichmäßigere Anlage der Drahtmaschen des schlauchförmigen Gestrickes auf einem gewellten oder gewickelten Leitungselement ab, um eine gleichmäßigere und konstantere Reibung bei gleichzeitig weniger Reibung zu ermöglichen. Hinsichtlich der absoluten Abmessungen der Drahtmaschen hat es sich als vorteilhaft erwiesen, dass die Maschenhöhe der Drahtmaschen minimal 4,00 mm und maximal 8,00 mm beträgt.

Für eine optimale Anlage des schlauchförmigen Gestrickes auf der Schlauchleitung ist es weiter besonders vorteilhaft, wenn der lichte Innendurchmesser des Gestrickes kleiner ist als der lichte Außendurchmesser der Schlauchleitung. Hierdurch wird das Gestricke effektiv mit einer Vorspannung in Richtung der Schlauchleitung versehen, sodass sich dieses ohne größere Zwischenräume an die Schlauchleitung anfügt und sie bei Axialbewegungen unterstützend dämpfen kann.

Weiterhin ist es vorteilhaft, wenn sich die Symmetrieachsen der Maschen des schlauchförmigen Gestrickes parallel zur Achse der Schlauchleitung erstrecken. Dadurch wird ebenfalls eine gleichmäßigere Anlage der Maschen auf der Schlauchleitung garantiert. Auf diese Weise verbessern sich die statischen bzw. dynamischen Eigenschaften des Gestrickes und in der Folge führt dies zu einer Erhöhung der Lebensdauer.

Auch die Masse des schlauchförmigen Gestrickes im Vergleich zu der Schlauchleitung ist für die Lebensdauer des Gestrickes auf der Schlauchleitung sowie dessen dynamischen Eigenschaften von besonderem Interesse. Um die verbesserten statischen und dynamischen Eigenschaften des schlauchförmigen und "glatten" Gestrickes in Kombination mit einer erhöhten Lebensdauer nicht zu verlieren, ist es vorteilhaft, wenn die Masse des schlauchförmigen Gestrickes maximal 20% der Masse der Schlauchleitung entspricht.

Diese Begrenzung der Masse des Gestrickes ist insbesondere von Vorteil, falls zumindest noch ein zweites Gestricke auf der radialen Außenseite der Schlauchleitung angeordnet wird. Wichtig hierbei ist, dass zumindest das innere der beiden Gestricke mit nach innen orientierten Maschenschenkeln ausgebildet ist. Besonders vorteilhaft ist es aber, wenn beide Gestricke nach radial innen orientierte Maschenschenkel aufweisen.

Zusätzlich kann der radiale Abstand der Maschenschenkel der Maschen der auf der radialen Außenseite der Schlauchleitung befindlichen jeweiligen Gestricke kleiner als der radiale Abstand der Maschenköpfe und Maschenfüße hinsichtlich der Achse der Schlauchleitung sein. Dies bedeutet, dass zumindest ein Gestricke, welches sich auf der radialen Außenseite der Schlauchleitung und auf der radialen Innenseite eines weiteren Gestrickes befindet, auf der der Schlauchleitung radial zugewandten Seite "glatt", d.h. entsprechend Anspruch 1 angeordnet ist. Eine solche kombinierte Anordnung von Gestricken bietet den Vorteil, dass das Gestricke, welches sich an der radialen Außenseite der Schlauchleitung befindet, "glatt" gegenüber der Schlauchleitung angeordnet ist und somit die oben genannten Vorteile wie gleichmäßige Anlage der Maschen auf der Schlauchleitung, gleichmäßigere Reibung, etc. erfüllt und dass gleichzeitig das radial am weitesten außen liegende Gestricke hinsichtlich der gesamten Anordnung aus Schlauchleitung und übereinander liegender Gestricke ebenfalls "glatt" gegenüber der radialen Außenseite der gesamten Anordnung ausgebildet ist und so eventuelle unbeabsichtigte Berührungen/Reibung der Anordnung aus Schlauchleitung und Gestrickelagen an möglichen benachbarten Befestigungs- oder Fixierungsteilen etc. vermieden werden, die zu einer Verkürzung der Lebensdauer führen könnten.

Im Hinblick auf die bevorzugten Einsatzmöglichkeiten des erfindungsgemäßen Leitungselementes mit dem schlauchförmigen Gestricke bietet es sich - wie bereits vorstehend erwähnt - an, die Schlauchleitung flexibel und insbesondere als gewelltes oder gewickeltes Leitungselement auszuführen. Ebenso lassen sich die Vorteile der Erfindung aber erzielen, wenn die Schlauchleitung, an der das Gestricke anliegt, aus einem nicht mediumdichten Schlauch aus einem Geflecht, Gestricke oder Gewirk oder einem sonstigen Schlauchelement wie etwa einem Ringelement, Gestrickekissen etc. besteht, dessen primäre Funktion nicht der Transport von Medien ist, sondern mechanische oder auch akustische Zwecke, wie z.B. die mechanische Unterstützung axial oder radial benachbarter Leitungselemente, die Schwingungsentkopplung, Bedämpfung etc.

Üblicherweise werden die Gestricke auf einer gewellten Schlauchleitung oder genauer auf einem Balg zur allseitigen Bewegungsaufnahme eingesetzt. Hierbei ist es üblich, dass der Balg aus mindestens zwei Wellen mit unterschiedlichem Außendurchmesser besteht, jedoch kann auch ohne Einschränkung eine Schlauchleitung ohne entsprechende Vorwellen verwendet werden.

Die oben genannten absoluten und relativen Abmessungen des schlauchförmigen Gestrickes sind bei einem Einsatz auf mehrlagigen Bälgen besonders vorteilhaft, wenn die Wandstärke jeder Lage des Balges maximal 0,40 mm beträgt. Die Verwendung mehrlagiger Bälge erhöht nicht nur die Lebensdauer der Bälge aufgrund reduzierter Materialspannungen, sondern bietet gleichzeitig auch genügend Eigenstabilität des Balges. Bei Verwendung des schlauchförmigen Gestrickes ist es besonders vorteilhaft, wenn der Balg 2- oder 3-lagig ausgestaltet ist. Eine derartige Anordnung ermöglicht es, eine gute Dämpfung oder Entkopplung der aus Balg und Gestrickeschlauch bestehenden Anordnung zu erreichen. Eine optimale Ausgestaltung eines solchen aus Balg und schlauchförmigem Gestricke gebildeten Elementes ergibt sich bei Verwendung eines 2-lagigen Balges, falls die Wandstärke jeder Lage des 2-lagigen Balges zwischen 0,15 mm und 0,25 mm beträgt. Bei einem 3-lagigen Balg ist das Optimum für diese Wandstärken zwischen 0,15 mm und 0,30 mm.

Weitere Merkmale und Vorteile der vorliegenden Erfindung ergeben sich aus der nachfolgenden Beschreibung eines Ausführungsbeispiels anhand der Zeichnungen:
- Figur 1A: zeigt einen Querschnitt in Axialrichtung eines erfindungsgemäßen schlauchförmigen so genannten innenseitig "glatten" Gestrickes gemäß Anspruch 1 auf einem gewellten Leitungselement oder Balg;
- Figur 1B: zeigt ein Gestricke gemäß Figur 1A in der Aufsicht mit darunter liegendem Balg (nicht gezeigt) mit nach außen aus der Zeichenebene heraus ausgebildeten Maschenköpfen und Maschenfüßen;
- Figur 1C: zeigt zum Vergleich einen Querschnitt in Axialrichtung eines bisher üblichen schlauchförmigen Gestrickes im Stand der Technik mit einem gewellten Leitungselement oder Balg und darauf befindlichem schlauchförmigen Gestricke;
- Figur 1D: zeigt das schlauchförmige Gestricke gemäß Figur 1C analog Figur 1B in der Draufsicht mit außen, d.h. aus der Zeichenebene heraus liegenden Maschenschenkeln;
- Figur 2: zeigt den prinzipiellen Aufbau eines erfindungsgemäßen Gestrickes gemäß Figur 1A bzw. 1B.

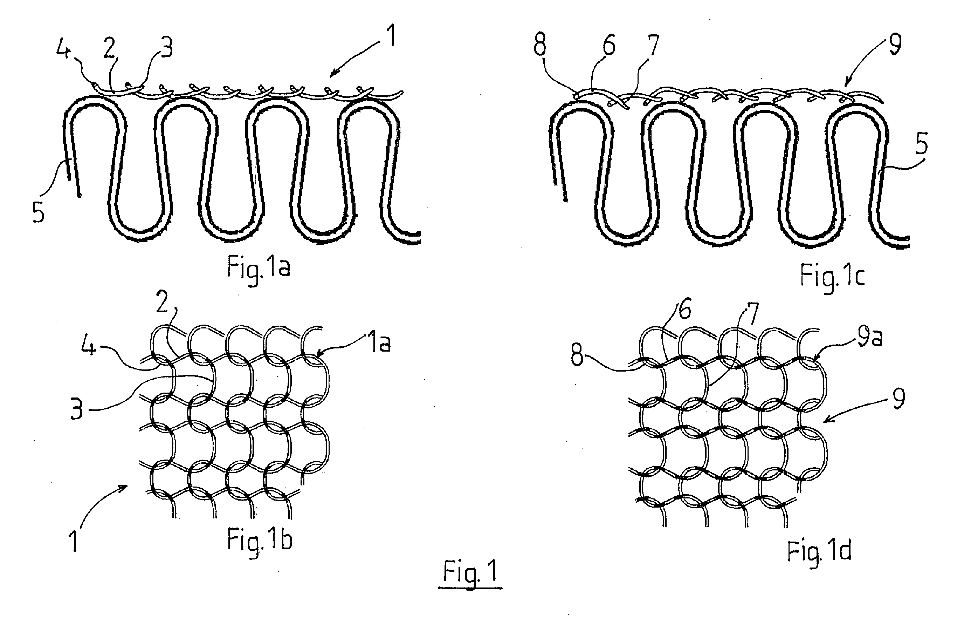

Das in Figur 1A dargestellte erfindungsgemäße Gestricke 1 besteht aus Drahtmaschen 1a mit Maschenköpfen 3, Maschenschenkeln 2 und Maschenfüßen 4. Das Gestricke 1 des erfindungsgemäßen Leitungselementes befindet sich auf einer gewellten Schlauchleitung oder Balg 5, wobei das schlauchförmige Gestricke 1 auf der radialen Außenseite der gewellten Schlauchleitung 5 aufliegt. Die Maschenköpfe 3 und -füße 4 sind hierbei auf der abgewandten Seite der Schlauchleitung angeordnet. Die Maschenschenkel 2 liegen an der radialen Außenseite der gewellten Schlauchleitung.

Figur 1B zeigt das erfindungsgemäße Gestricke gemäß Figur 1A in einer Draufsicht, wobei die darunter liegende gewellte Schlauchleitung nicht gezeigt ist. Das erfindungsgemäße Gestricke besteht aus Maschenköpfen 3 und Maschenfüßen 4, welche in der Draufsicht aus der Zeichenebene herausragen. Die Maschenschenkel 2 sind hier unterhalb der Zeichenebene angeordnet und liegen gemäß Figur 1A an der radialen Außenseite der gewellten Schlauchleitung an.

Figur 1C zeigt zum Vergleich zu Figur 1A, 1B ein bisher üblicherweise eingesetztes schlauchförmiges Gestricke 9 des Standes der Technik, wieder mit einer gewellten Schlauchleitung 5. Die Maschenköpfe 7 und Maschenfüße 8 der Drahtmaschen 9a sind im Gegensatz zu Figur 1A der Außenseite der gewellten Schlauchleitung 5 zugewandt und kommen mit dieser in Kontakt. Die Maschenschenkel 6 sind der Außenseite der gewellten Schlauchleitung 5 abgewandt. Bei dieser Art der Anordnung der Maschenköpfe 7 und -füße 8 können sich diese in den Wellen der Schlauchleitung verhaken und dadurch das Gestricke und ebenso die Schlauchleitung beschädigen. In der Folge reduziert sich die Lebensdauer des schlauchförmigen Gestrickes und ebenso des gesamten Leitungselementes erheblich.

In Figur 1D wird analog Figur 1B das in Figur 1C gezeigte Gestricke 9 in der Draufsicht ohne die darunter liegende gewellte Schlauchleitung gezeigt. Hierbei sind die Maschenköpfe 7 und Maschenfüße 8 der Maschen des schlauchförmigen Gestrickes, bezogen auf die Zeichenebene, unterhalb der Maschenschenkel 6 angeordnet und liegen auf der radialen Außenseite der gewellten Schlauchleitung (nicht gezeigt) an.

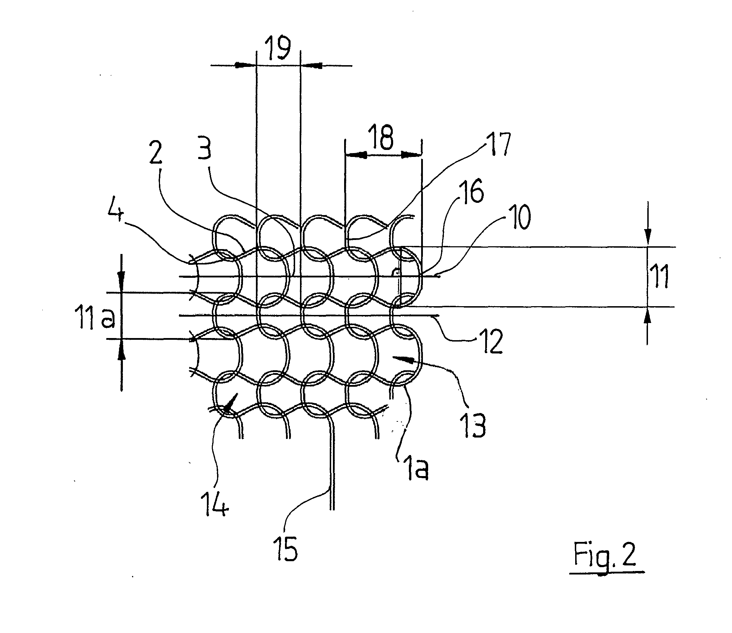

Figur 2 zeigt den prinzipiellen Aufbau des Gestrickes 1 des erfindungsgemäßen Leitungselementes. Gezeigt wird neben Drahtmasche 1a mit Maschenkopf 3, Maschenschenkel 2 und Maschenfuß 4 auch die Anordnung von Stegmaschen 14 bzw. Nadelmaschen 13, die abwechselnd beim Stricken entlang eines Drahtes 15 entstehen. Auch die Symmetrieachse 10 der Nadelmaschen 13 und die Symmetrieachse 12 der Stegmaschen 14 wird gezeigt.

Die Maschenbreite 11 entspricht dem maximalen senkrecht zur Symmetrieachse 10 der Nadelmaschen 13 bzw. 12 der Stegmaschen 14 gemessenen Abstand zwischen den in den Maschenkopf übergehenden Maschenschenkeln der Nadelmaschen 13 bzw. Stegmaschen 14. Die Maschenhöhe ergibt sich dann aus den im Verlauf eines Drahtes gebildeten Nadelmaschen 13 und Stegmaschen 14. Hierbei ist die Maschenhöhe 18 als maximaler Abstand zwischen den Maschenköpfen 16 bzw. 17 von zwei benachbarten und entlang eines Drahtes liegenden Nadelmaschen 13 und Stegmaschen 14 parallel zur Symmetrieachse der Nadel- 13 und Stegmaschen 14 definiert.

Insgesamt bietet das erfindungsgemäße schlauchförmige Gestricke nicht nur den Vorteil einer erhöhten Lebensdauer durch die gleichmäßigere Anlage des Gestrickes auf der Schlauchleitung und der damit verbundenen gleichmäßigen Reibung, sondern ist auch bezüglich seiner Dämpfungseigenschaften bei einer axialen Längenänderung der Schlauchleitung wegen der fehlenden Biegespannung beim Aufwölben des Gestrickes optimiert.

## Patentansprüche

1. Flexibles Leitungselement insbesondere für Abgasanlagen von Kraftfahrzeugen mit einer flexiblen Schlauchleitung (5) und einem auf der radialen Außenseite der Schlauchleitung angeordneten schlauchförmigen Gestricke (1), wobei das schlauchförmige Gestricke aus Drahtmaschen (1a, 9a) mit Maschenkopf (3, 7), Maschenschenkeln (2, 6) und Maschenfüßen (4, 8) besteht,
**dadurch gekennzeichnet,**
**dass** das Gestricke (1) so ausgebildet ist, dass die Maschenschenkel (2) der Drahtmaschen (1a) des Gestrickes (1) auf der zur Schlauchleitung (5) hingewandten radialen Innenseite des Gestrickes angeordnet sind, und dass die Maschenköpfe (3) und die Maschenfüße (4) der Drahtmaschen auf der der Schlauchleitung abgewandten radialen Außenseite des Gestrickes (5) angeordnet sind.

2. Leitungselement nach Anspruch 1,
**dadurch gekennzeichnet,**
**dass** das Gestricke (1) aus Edelstahl besteht.

3. Leitungselement nach Anspruch 1,
**dadurch gekennzeichnet,**
**dass** das Gestricke (1) aus Steg- (14) und Nadelmaschen (13) aufgebaut ist.

4. Leitungselement nach Anspruch 1,
**dadurch gekennzeichnet,**
**dass** die Schlauchleitung (5) ein gewelltes oder gewickeltes Leitungselement, insbesondere ein gewellter Balg oder ein Wickelschlauch ist.

5. Leitungselement nach Anspruch 1,
**dadurch gekennzeichnet,**
**dass** der Durchmesser der Drähte (15) des Gestrickes (1) kleiner als 0,4 mm ist, bevorzugt zwischen 0,15 mm und 0,30 mm und insbesondere zwischen 0,23 mm und 0,25 mm liegt.

6. Leitungselement nach Anspruch 1,
**dadurch gekennzeichnet,**
**dass** das Gestricke (1) aus weniger als 5 Drähten und insbesondere aus 3 Drähten hergestellt ist.

7. Leitungselement nach Anspruch 3,
**dadurch gekennzeichnet,**
**dass** die Anzahl der Nadelmaschen (13) und der Stegmaschen (14) auf dem Umfang einerseits sowie die aus dem maximalen senkrecht zu der Symmetrieachse (10 bzw. 12) einer Masche gemessenen Abstand zweier in den Maschenkopf übergehenden Maschenschenkel bestehenden Breite (11, 11a) der Nadelmaschen (13) und der Stegmaschen (14) andererseits so angeordnet sind, dass das Verhältnis aus Breite (11a) einer Stegmasche (14) und Breite (11) einer Nadelmasche (13) zwischen 0,5 und 2 beträgt.

8. Leitungselement nach Anspruch 4,
**dadurch gekennzeichnet,**
**dass** die Maschenhöhe (18), die durch den in axialer Richtung gemessenen maximalen Abstand zwischen Maschenkopf (16) einer Nadelmasche (13) und Maschenkopf (17) einer im weiteren Verlauf eines Drahtes benachbarten Stegmasche (14) entlang der Symmetrieachse (10 bzw. 12) der jeweiligen Maschen definiert ist, höchstens doppelt so groß wie die Steigung des gewickelten Leitungselementes (5) oder höchstens doppelt so groß wie die Wellenlänge des gewellten Leitungselementes (5) ist.

9. Leitungselement nach Anspruch 8,
**dadurch gekennzeichnet,**
**dass** die Maschenhöhe (18) minimal 4,0 mm und maximal 8,0 mm beträgt.

10. Leitungselement nach Anspruch 1,
**dadurch gekennzeichnet,**
**dass** der lichte Innendurchmesser des Gestrickes (1) kleiner als der lichte Außendurchmesser der Schlauchleitung (5) ist.

11. Leitungselement nach Anspruch 1,
**dadurch gekennzeichnet,**
**dass** sich die Symmetrieachsen (10 bzw. 12) der Maschen des Gestrickes (1) parallel zur Achse der Schlauchleitung (5) erstrecken.

12. Leitungselement nach Anspruch 1,
**dadurch gekennzeichnet,**
**dass** die Masse des Gestrickes (1) maximal 20% der Masse der Schlauchleitung (5) beträgt.
